# EUROPEAN PATENT SPECIFICATION

(11) **EP 3 088 232 B1**
(45) Date of publication and mention of the grant of the patent: **18.04.2018**
(21) Application number: 16167407.2
(22) Date of filing: 28.04.2016
(51) Int. Cl.: B60K 13/04

(54) **AMMONIA PRECURSOR REFILL DEVICE**
AMMONIAKVORLÄUFER-NACHFÜLLVORRICHTUNG
DISPOSITIF DE RECHARGE DE PRÉCURSEUR D'AMMONIAC

(30) Priority: 28.04.2015 EP 15305653
(43) Date of publication of application: 02.11.2016
(73) Proprietor: Plastic Omnium Advanced Innovation and Research, 1120 Bruxelles (BE)
(72) Inventor: VAN SCHAFTINGEN, Jules-Joseph, 1300 Wavre (BE); MONGE-BONINI, Beatriz, 1040 Bruxelles (BE); DOUGNIER, François, 3191 Hever (BE); DE MAN, Pierre, 1090 Bruxelles (BE)
(74) Representative: Remy, Vincent Noel Paul

(56) References cited:
- WO-A1-2008/078059
- US-A- 2 432 025
- US-A- 3 917 117
- US-A1- 2011 138 780

## Description

### Field of Invention

The invention relates to an ammonia precursor refill device, in particular to a urea refill device, for refilling a vehicle tank with an ammonia precursor solution, in particular an eutectic aqueous urea solution.

### Background

There exist prior art systems for supplying ammonia or ammonia precursor to an exhaust line of a vehicle in order to reduce the NOx emissions. A SCR (Selective Catalytic Reduction) process is used for converting nitrogen oxides of an exhaust gas coming from a vehicle engine into diatomic nitrogen and water. The SCR process enables the reduction of nitrogen oxides by injection of a reducing agent, generally ammonia, into the exhaust line. This ammonia may be obtained by using different techniques. One known technique is based on the use of an ammonia precursor. Today several automotive SCR systems are using Diesel Exhaust Fluid (DEF), also called AdBlue®, which is an aqueous urea solutions containing 32.5% of urea (as specified by the ISO22241 standard). Generally, such urea solution is stored in a container mounted on the vehicle. The urea solution is injected into the exhaust line, and the gaseous ammonia is derived from the pyrolytic (thermal) decomposition of the injected urea solution.

Refill has to be done at specific refilling stations or using a canister (jerry can) containing such a solution. These refilling systems have several limitations. Refilling stations for urea solutions systems are not widely available in some regions of the world. Further, a canister or jerry can is relatively bulky/heavy due to the presence of water: for a refill of 1000 grams of urea, the necessary amount of DEF/AdBlue® is 3077 grams and corresponds to 2,82 litre. In other words such a canister or jerry can will take up a large space, especially if the canister is kept on-board of the vehicle as a spare reserve in case of shortage. Also, typically, the shelve life of the DEF is limited to about one year due to progressive degradation of the urea in presence of water (hydrolysis and generation of ammonia), so the spare reserve has a limited life and is lost if it is not consumed in due time The features of the preamble of claim 1 are known from WO2008/078059.

### Summary

The object of embodiments of the invention is to provide a more compact refilling device for refilling a vehicle with an ammonia precursor solution, as compared to prior art solutions, whilst maintaining an acceptable handling.

According to a first aspect of the invention there is provided an ammonia precursor refilling device comprising a container storing an ammonia precursor in solid form. The container is configured to fit within a first volume during storage and to be enlarged to a second volume which is larger than the first volume. The container is provided with an opening which is closed by an opening mechanism. The second volume is chosen for allowing the container to be filled through the opening with water in an amount sufficient to allow said ammonia precursor in solid form to be at least partially dissolved to form an ammonia precursor solution.

By containing an ammonia precursor in solid form, e.g. powder, granules, pills, pellets, etc. in a protective container, a more compact and lighter first storage volume may be obtained. A device of the invention offers a more compact and lighter storage versus the jerry can, making it much more convenient as a device for occasional refill, especially when it is stored on-board of a vehicle. In addition, the storage of the urea in solid form without contact with water and the use of a protective package result in a longer shelve life. By configuring the container such that it can be enlarged, the container can be modified, e.g. extended or unfolded, to obtain a larger second volume such that a sufficient amount of water can be added. More in particular, water may be added in an appropriate quantity so as to produce an ammonia precursor solution with a suitable predetermined concentration.

In an exemplary embodiment the opening mechanism is a removable cap, a removable seal or a valve. The adding of water can take place by removing the cap, breaking the seal or opening the valve and adding a predetermined amount of water though the opening that is created by removing the cap, breaking the seal or opening the valve.

In an exemplary embodiment the container comprises a flexible bag in which the ammonia precursor is stored in solid form. A flexible bag has the advantage of being light whilst at the same time being capable of providing an adequate protective package.

In an exemplary embodiment the container is provided with an indication mark indicating a filling level, said indication mark indicating to a user how much water needs to be added to the container.

In an exemplary embodiment the container comprises a rigid neck configured to allow insertion of a neck of a water bottle, said neck of said water bottle having a diameter below 50 mm. In that way the device can be used in combination with most standard water bottles for adding an appropriate amount of water to the enlarged container.

In an exemplary embodiment the second volume is at least 1,5 times bigger than the first volume. In the case of solid urea, the ratio of the second volume with respect to the first volume is preferably larger than 1,7, more preferably larger than 2,0.

In an exemplary embodiment the container comprises a flexible bag configured to have the first volume in a folded state and to have the second volume in an unfolded state filled with water.

In another exemplary embodiment container comprising an outer housing with a bellow and a closed inner bag, and the ammonia precursor is stored in the closed inner bag. The outer housing is provided with the opening, and the bellow allows extending a height of the outer housing in order to be able to modify the volume of the housing from the first volume to the second volume.

In a possible embodiment the opening mechanism comprises a cap, and the cap comprises a base plate with a pipe and a removable secondary cap closing said pipe. In that way the secondary cap may be removed for venting when the container is enlarged from the first volume to the second volume. Further, the pipe may facilitate the filling of the urea tank with the ammonia precursor solution in the container.

In an exemplary embodiment the ammonia precursor refilling device further comprises locking means configured for locking the container in a state in which the container has the second volume.

In a preferred embodiment the ammonia precursor comprises solid urea or a high concentration solid urea-water solution which is solid at 20 degrees Celsius. The hydrated urea can contain up to 40% water and the amount of water to be added will be adjusted according to the urea water content and the desired urea concentration in the final solution.

In an exemplary embodiment the amount of solid urea stored is a multiple of between 466g and 497 g, and the second volume is such that a multiple of 1 litre of water can be added. Such a device will be advantageous in countries where water is readily available in 1 or 2 litre water bottles or reservoirs.

According to a second aspect of the invention there is provided an ammonia precursor refilling device comprising a container storing an ammonia precursor in solid form. The container has a first opening which is closed by a first opening mechanism. The first opening has an interface which is configured for being mechanically coupled with a neck of a water bottle or water container. The container has a second opening which is closed by a second opening mechanism; said second opening mechanism allowing filling of a vehicle tank with an ammonia precursor solution contained in the assembly of the ammonia precursor refilling device coupled to the water bottle.

By containing an ammonia precursor in solid form, e.g. powder, granules, pills, pellets, etc. in a protective container, a compact and light storage volume may be obtained. A device according to the second aspect of the invention also offers a more compact and lighter storage versus the jerry can, making it much more convenient as a device for occasional refill, especially when it is stored on-board of a vehicle. In addition, the storage of the urea in solid form without contact with water and the use of a protective package result in a longer shelve life. By configuring the container such that it can be coupled to a standard water bottle or reservoir, an assembly with a larger volume is created such that the solid ammonia precursor can be dissolved at least partially in a sufficient amount of water, so as to produce an ammonia precursor solution with a suitable predetermined concentration.

In an exemplary embodiment the first opening is formed in a neck of the container, and the neck is provided with an internal thread which is couplable with an external thread of a water bottle.

In an exemplary embodiment the first opening mechanism comprises a seal covering the first opening, and the seal is configured to be broken by coupling a water bottle to the interface associated with the first opening. In that way any spillage of ammonia precursor may be avoided.

In an exemplary embodiment the second opening mechanism comprises a cap and/or a valve. In an exemplary embodiment the second opening mechanism may comprise a screw-on coupling interface that can be mounted on a filler neck as described in standard ISO 22241 or on a fitting as described in EP 2 490 914 in the name of the Applicant.

In an exemplary embodiment the second opening mechanism is configured to allow venting of the container after having mechanically coupled the container to a water bottle.

In an exemplary embodiment the ammonia precursor in solid form comprises granules having dimensions between 0.01 micron and 50 mm, more preferably between 100 micron and 5 mm, and e.g. between 500 microns and 5 mm. Preferably the granule is substantially ball-shaped.

In an exemplary embodiment the storage compartment stores ammonia precursor granules having a coating, said coating being adapted to be dissolved, e.g. thermally dissolved, in the ammonia precursor liquid. In an exemplary embodiment, the coating of the ammonia precursor granules may be made of any one or more of the following materials: polyvinylidene chloride (PVDC), linear low density polyethylene (LLDPE), certain grades of ethylene vinyl alcohol (EVOH), certain grades of polyvinyl alcohol (PVOH), bi-axially oriented polypropylene (BOPP), cyclic olefin polymer (COC), polyethylene naphthalate (PEN), liquid-crystal polymers (LCPs, a class of aromatic polyester polymers), polypropylene (PP), and polyethylene terephthalate blends (PET/PE, PET/PVDC/PE, PET/PVOH/PE, PET/EVOH/PE). In some embodiments of the invention, the coating of the ammonia precursor granules may be made of a wax material, for example, from an insect, vegetal, mineral, petroleum or synthetic wax. For example, the coating could be made from beeswax, carnauba wax, candelilla wax, Montan wax, paraffin wax. Suitable examples of coating materials can be found in the packaging industry. The material(s) may be chosen such that the coating is thermally dissolved or simply broken in the presence of water when the temperature is within a certain range, e.g. above 0°C so as to generate the ammonia precursor solution. The coating may be a single layer coating or a multi-layer coating.

The refilling device of the invention is also compatible with booster technology as described in European patent application EP 14177713.6 in the name of the Applicant, the text of which is incorporated herein by reference: a part of the solid ammonia precursor can be protected as described in this patent application (coating of granules) while another part of the ammonia precursor may be unprotected such that it will generate an ammonia precursor solution, e.g. an eutectic urea solution. For instance, granules containing solid urea in a protective shell can be added to unprotected urea which forms an eutectic AdBlue® solution after the addition of water. The protected urea can be dissolved later, e.g. in a dissolving compartment, optionally heated at higher temperatures, e.g. between 40 and 90 °C, preferably just before being consumed, i.e. before being sent to the exhaust pipe for SCR applications or before being converted, for instance to ammonia or aqua ammonia for use in SCR systems or fuel cells.

The water quality is an important factor for the good functioning of the SCR system. Since a contaminated solution can lead to catalyst poisoning, it is important to ensure that the user is preparing the urea solution with the right quality of water. A catalyst poisoning/break-down may lead to premature replacement at a high cost. Demineralized water, easily found in supermarkets or at gas stations, is considered to be good quality water ideal to prepare the urea solution. As an additional kit component, pH strips and a color matching chart should be provided. The strip can be placed directly into the water and the pH checked against the color chart. Pure water is slightly acidic and demineralized water will test out around pH 5.8. Sigma-Aldrich or Merckmillipore offer easy-to-read pH strips and pH test papers having wide range and high accuracy.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figures 1A and 1B illustrate schematically a cross section of a first exemplary embodiment of a refilling system of the invention in a storage state and in a refilling state;
Figure 2 illustrates schematically a cross section of a second exemplary embodiment of a refilling system of the invention in a storage state and in a refilling state; and
Figures 3A and 3B illustrate schematically a cross section of a third exemplary embodiment of a refilling system of the invention in a storage state and in a refilling state.
Figure 4 illustrates schematically a cross section of a fourth exemplary embodiment of a refilling system of the invention in a storage state and in a refilling state;
Figure 5 illustrates schematically a cross section of a fifth exemplary embodiment of a refilling system of the invention in a storage state.

### Description of embodiments

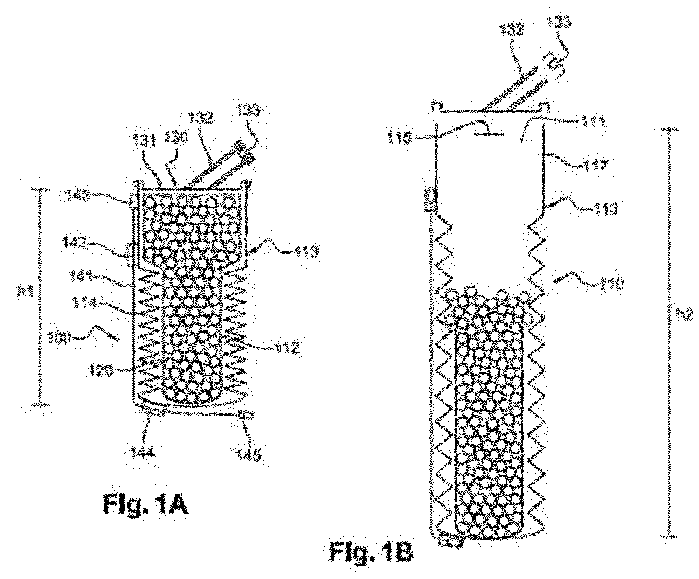

Figures 1A and 1B illustrate a first embodiment of an ammonia precursor refilling system 100 comprising a container 110 storing an ammonia precursor 120 in solid form. The container 110 is configured to fit within a first volume during storage (figure 1A) and to be enlarged to a second volume (figure 1B) which is larger than the first volume, when it is need for refilling a vehicle tank. The container has an opening 111, here an open top end, which is closed by an opening mechanism, here a removable cap 130. The second volume is chosen for allowing the container 110 to be filled through the opening 111 with water in an amount sufficient to allow the ammonia precursor in solid form to be at least partially dissolved to form an ammonia precursor solution.

In the first exemplary embodiment, the container 110 comprises a flexible inner bag 112 in which the ammonia precursor is stored in solid form, and a more rigid outer housing 113. The outer housing 113 is provided with a bellow 114. The ammonia precursor 120 is stored in the closed inner bag 112, and the outer housing 113 is provided with the opening 111. The inner bag 112 may be a protective plastic bag containing e.g. solid urea granules 120. The bellow 114 allows extending a height of the outer housing 113 from a height h1 (storage state) to a height h2 (refilling state), see figures 1A and 1B. Preferably the second height h2 (and hence the second volume) is at least 1,5 times bigger than the first height (and hence the first volume), and more preferably at least 1,7 times bigger than the first height. For convenient storage, the bellow 114 of the container 110 is retracted as represented on figure 1A, so as to have a compact shape.

The container 110 is provided with an indication 115 indicating a filling level, said indication indicating to a user how much water needs to be added to the container 110 in order to obtain a suitable ammonia precursor solution.

Preferably the container 110 comprises a rigid neck 117 configured to allow insertion of a neck of a water bottle, said neck of said water bottle having a diameter below 50 mm. In the first exemplary embodiment the rigid neck may be a prolongation extending upwardly beyond the bellow 114. In that way the container 110 can be easily filled with a standard water bottle, e.g. a standard 1 litre or 2 litre plastic water bottle. In the first exemplary embodiment, the refilling system further comprises locking means configured for locking the outer bellow in an extended position. The exemplary locking means comprise a retainer 141 having first and second clipping elements 143, 145 at respective ends of the retainer 141. In the extended position of the bellow 114, the clipping elements 143, 145 clip into receiving elements 142, 144 where they remain locked. For clarity reasons, only one retainer 141 is drawn in figures 1A and 1B, but there may be several retainers 141 arranged at various positions around the circumference of the container 110.

The cap 130 comprises a base plate 131, a pipe 132 arranged in the base plate 131, and a secondary cap 133 for closing the pipe 132. When a refill is to be performed, the secondary cap 133 is opened so as to allow air to come in the container 110 and the bellow 114 is extended up to full extension (figure 1B), at which position the locking means 141-145 lock the container 110 in the extended refill position. During the extension of the bellow 114 of the container 110, the inner bag 112 may be torn, e.g. using a device not shown, liberating the solid ammonia precursor 120 in the container 110. Alternatively the inner bag 112 may be manually or mechanically cut or torn open. The locking of the container 110 in an extended position allows getting a well dimensioned suitable inner volume with a height h2. After the extension, the release of the solid ammonia precursor 120, and the locking of the container 110, the main cap 130 is removed and water of appropriate quality is poured in the container 110 up to the level mark 115. Alternatively the main cap 130 may be removed before extending the bellow 114, and the solid ammonia precursor 120 may be released after removing the main cap 130. The main cap 130 with secondary cap 133 may be put back in position, so as to avoid accidental spillage during further manipulation.

The container 110 may be left at rest while the solid ammonia precursor is being dissolved in the water. The container 110 may also be shaken so as to speed up the dissolution. The bellow shape 114 of the side wall of the outer housing 113 may contribute to the mixing and the dissolution when the container 110 is shaken.

The container 110 can also be used as a cooling element, for instance by introducing it in a (thermally insulated) conservation box. The cooling effect of the dissolution of urea in water is known and exploited and a temperature reduction of 10°C or more can be readily achieved.

When sufficient dissolution is achieved, the solution can be poured in an ammonia precursor solution tank, typically a DEF/AdBlue® tank of the vehicle.

The protective bag 112 can be made of any plastic offering appropriate properties. Various materials are offering good performances, in particular polyolefins such as polyethylene. Also a multilayer structure based on polyethylene or polypropylene with an EVOH barrier against diffusion of humidity, may be used. The outer housing 113 and the cap 130 can be made of any plastic offering appropriate properties. Polyethylene or polypropylene is well suited and light.

In an exemplary embodiment the solid ammonia precursor 120 may consist of urea granules. The weight of urea granules may be e.g. 963 g, and the amount of water added may be 2 litres (2000 g), resulting in 2963 g of mixture containing 32.5% in weight of urea, or 2.72 litres (the specific mass of the urea solution is 1.09 kg/l). In an exemplary embodiment the outer housing 113 is cylindrical with a diameter of e.g. 100 mm, and a height h1 of 160 mm before extension and a height h2 of 390 mm after extension. The volume and weight of the device with the urea granules before extension and filling with water are 1.3 litre and 1020 g, respectively, i.e. much less than the volume and weight that a jerry can with a corresponding amount of urea solution would be (about 2.8 litre and 3000 g). More generally the amount of solid urea stored is preferably a multiple of between 466 g and 497 g, and the second volume is such that the same multiple of 1 litre water can be added, at least in countries where standard water bottles are sold as 1 litre or 2 litre bottles.

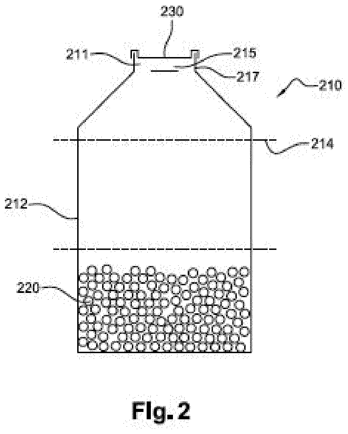

Figure 2 illustrates a second embodiment of an ammonia precursor refilling system comprising a container 210 storing an ammonia precursor 220 in solid form. The container 210 is configured to fit within a first volume during storage and to be enlarged to a second volume which is larger than the first volume: this is reached by using a flexible bag 212 which can be folded, e.g. along fold lines 214, in the storage state and which can be unfolded in the refill state. The container 210 is provided with an opening 211 which is closed by a removable cap 230. The second volume is chosen for allowing the container 210 to be filled through the opening 211 with water in an amount sufficient to allow the ammonia precursor in solid form to be at least partially dissolved to form an ammonia precursor solution. The container 210 is provided with an indication 215 indicating a filling level, said indication indicating to a user how much water needs to be added to the container. The container comprises a rigid neck 217 configured to allow insertion of a neck of a water bottle. Preferably the second volume (in the refill state, when filled with water) is at least 1,5 times bigger than the first volume (in the storage state without water).

The bag 212 may be a protective plastic bag containing ammonia precursor, e.g. in the form of solid urea granules or powder. For convenient storage, the bag can be folded along fold lines 214 as indicated in figure 2, so as to offer a compact shape. When a refill is to be performed, the cap 230 is opened and the bag 212 is unfolded. Water of appropriate quality is poured in the container 210 up to the level mark 215. The cap 230 may be put back in position so as to avoid accidental spillage during further manipulation. The container 210 may be left at rest while the solid ammonia precursor is being dissolved in the water. The container 210 may also be shaken so as to speed up the dissolution. The container 210 may also be used as a cooling element, for instance by introducing it in a conservation box. When dissolution is achieved up to a sufficient degree, the ammonia precursor solution can be poured in an ammonia precursor solution tank, e.g. a DEF/AdBlue® tank of the vehicle.

The protective bag 212 can be made of any flexible plastic material offering appropriate properties. Various materials are offering good performances, in particular polyethylene or a multilayer structure based on polyethylene or polypropylene with an EVOH barrier against diffusion of humidity.

As for the first exemplary embodiment, the solid ammonia precursor 120 may consist of urea granules or powder. The weight of solid urea may be e.g. 963 g, and the amount of water added may be 2 litres (2000 g), resulting in 2963 g of mixture containing 32.5% in weight of urea, or 2.72 litres.

The dimensions and shape of the container of the first and second exemplary embodiments may be adapted so as to suit various capacities. In particular, the dimensions and shape may be adapted to the needs of the vehicle and to the size of water containers available on the market. For instance, on markets where water is sold by gallon (3.78 litres), a convenient dimensioning of a device similar to the one represented in the first and second exemplary embodiment is as follows: the weight of solid urea is 1820 g, the amount of water to be added is 3.78 litres, resulting in 5600 g of mixture containing 32.5% in weight of urea, or 5.14 litres of urea solution.

According to a variant of the first exemplary embodiment, the protective bag 112 may be omitted: the outer housing 113 and cap 130 can assume the protective function provided that appropriate materials are used and tightness is ensured. For instance, multilayer structures with polyethylene and EVOH barrier can be used for the outer housing 113 and for the various parts 131-133 of the cap 130, similar to the multilayer structure used for fuel tanks. In the absence of a protective bag 112, the outer housing 113 and/or the cap 130 can also be fitted with known mixing devices (for instance cross placed in the chamber) to promote mixing and dissolution while the container 110 is agitated.

"Boosted" solutions according to European patent application EP 14177713.6in the name of the Applicant can also be refilled with a refilling system of the invention. For instance a solution containing 32.5% of urea in solution and 22.5% of urea in solid granules can be prepared with a refilling system, e.g. according to the first and second exemplary embodiment: the bag 112, 212 may contain e.g. 722 g of urea powder and 500 g of urea in coated urea granules. The coating may be such that it allows a controlled release of the additional urea as described in European patent application EP 14177713.6 in the name of the Applicant. After extension, 1 litre of water (1000 g) is added, resulting in a total weight of 2222 g of "boosted" solution containing 55% of urea.

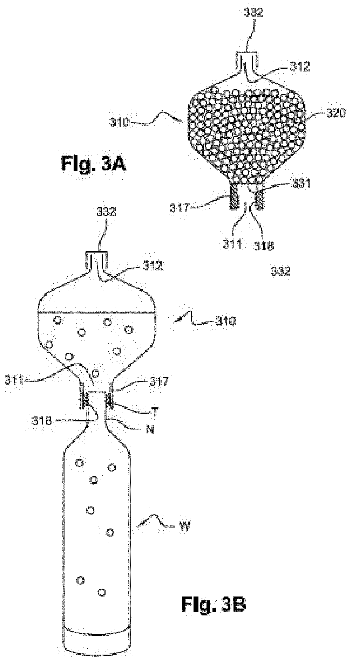

Figures 3A and 3B illustrate a third embodiment of an ammonia precursor refilling system comprising a container 310 storing an ammonia precursor 320 in solid form. The container 310 is configured to fit within a first volume during storage, see figure 3A. The container 310 has a first opening 311 which is closed by a removable first opening mechanism, here in the form of a seal 331. The first opening 311 has an interface 318 which is configured for being mechanically coupled with a neck N of a water bottle W. The water bottle W may be a standard commercially available water bottle. The seal 331 is configured and arranged to be broken by coupling a water bottle W to the interface 318 associated with the first opening 311. In the illustrated embodiment, the first opening 311 is formed in a neck 317 of the container, and the neck 317 is provided with an internal thread 318 which creates the interface which is couplable with an external thread T of a water bottle W.

The container 310 further comprises a second opening 312 which is closed by a second opening mechanism, e.g. a removable cap 332. The second opening 312 allows filling of a vehicle tank with an ammonia precursor solution contained in the assembly which is formed by the container 310 and the water bottle W, which are coupled to each other in the assembled refill state, see figure 3B. According to the third exemplary embodiment, when a refill is needed, the container 310 may be coupled to s standard water bottle or container as illustrated in figure 3B, such that the container 310 together with the water bottle or water container creates an assembly having a second volume which is larger than the first volume of the container 310. After coupling the container 310 to the water bottle of water container, the second cap 332 may be opened to allow venting of the assembly. Alternatively there may be provided a separate venting device in a wall of the container 310.

The container 310 may be a flexible or a rigid container. The container 310 may comprises e.g. a protective bag made of a plastic offering appropriate properties. Various materials are offering good performances, in particular polyolefins such as polyethylene. Also a multilayer structure based on polyethylene or polypropylene with an EVOH barrier against diffusion of humidity, may be used. The container 310 may also consist of a relatively rigid container or may comprise rigid parts, e.g. made of a plastic material offering appropriate properties, such as polyethylene or polypropylene.

The solid ammonia precursor may be a powder or granules or a combination of both. Examples of suitable granules are urea granules, e.g. ball-shaped urea granules. All or some urea granules may be coated. Preferably, the size of the ammonia precursor granules is in a range from 0.01 micron to 50 mm, more preferably from 100 micron to 5 mm, and e.g. between 500 microns and 5 mm.

In an exemplary embodiment a granule contains solid ammonia precursor, and has a coating adapted to be dissolved in an ammonia precursor liquid. The solid ammonia precursor is preferably solid urea, but ammonia precursor granules may contain other materials than urea, such as ammonium carbamate which is also a solid that can dissolve in water and generate ammonia, and more generally ammonia salts. The coating may be adapted to be thermally dissolved in an ammonia precursor liquid. The coating of the ammonia precursor granules may be made of any one or more of the following materials: polyvinylidene chloride (PVDC), linear low density polyethylene (LLDPE), certain grades of ethylene vinyl alcohol (EVOH), certain grades of polyvinyl alcohol (PVOH), biaxially oriented polypropylene (BOPP), cyclic olefin polymer (COC), polyethylene naphthalate (PEN), liquid-crystal polymers (LCPs, a class of aromatic polyester polymers), polypropylene (PP), and polyethylene terephthalate blends (PET/PE, PET/PVDC/PE, PET/PVOH/PE, PET/EVOH/PE).

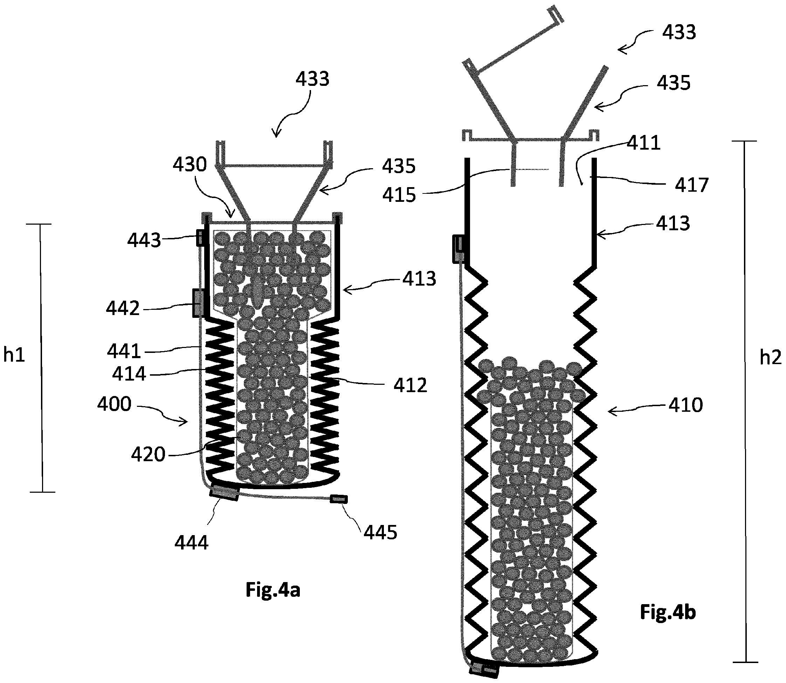

Figures 4A and 4B illustrate a fourth embodiment of an ammonia precursor refilling system 400 comprising a container 410 storing an ammonia precursor 420 in solid form. Figures 4A and 4B differ from Figures 1A and 1B only in that a secondary cap 433 closes a funnel shape tube 435 that is integrated into the main cap 430 and can be conveniently used to fill the container 410 with water. In this embodiment there is no need to remove the main cap 430 to fill the container 410. The removal of the main cap 430 however allows the refilling of the container 410 with urea granules 420 that can be sold separately as recharge bags.

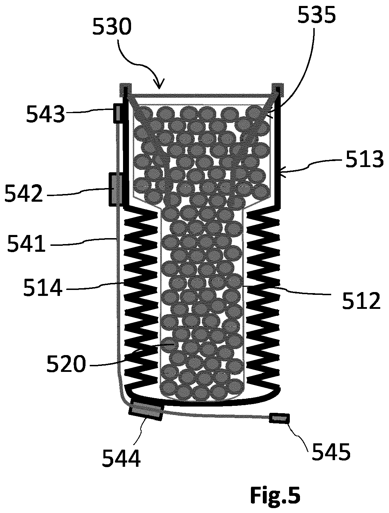

Figure 5 illustrates a fifth embodiment of an ammonia precursor refilling system 500 comprising a container 510 storing an ammonia precursor 520 in solid form. The embodiment of Figure 5 differs from the one of Figures 4A and 4B in that the funnel shape tube 535 is placed inside the flexible container 510. It can be conveniently used to fill the container with water, refill the container 513 with urea granules 520 and it can be removed and used to refill the urea solution tank with the freshly made urea solution.

In another alternative embodiment, the funnel shape tube 535 can be sold as a kit accessory and not necessarily coupled to the main cap 530 or inside the container 513.

Whilst the principles of the invention have been set out above in connection with specific embodiments, it is to be understood that this description is merely made by way of example and not as a limitation of the scope of protection which is determined by the appended claims.

## Claims

1. An ammonia precursor refilling device (100; 200; 400; 500) comprising a container (110; 210; 410; 510) storing an ammonia precursor (120; 220; 420; 520) in solid form **characterized in that**;
said container (110; 210; 410; 510) being configured to fit within a first volume during storage and to be enlarged to a second volume which is larger that the first volume;
said container (110; 210; 410; 510) being provided with an opening (111; 211; 411) which is closed by an opening mechanism (130; 230; 430; 530);
said second volume being measured for allowing the container (110; 210; 410; 510) to be filled through the opening (111; 211; 411) with water in an amount sufficient to allow said ammonia precursor (120; 220; 420; 520) in solid form to be at least partially dissolved to form an ammonia precursor solution.

2. The ammonia precursor refilling device (100; 200; 400; 500) of claim 1, wherein the opening mechanism is a removable cap (130; 230; 430; 530), a removable seal or a valve.

3. The ammonia precursor refilling device (100; 200; 400; 500) of claim 1 or 2, wherein the container (110; 210; 410; 510) comprises a flexible bag (112; 212; 412; 512) in which the ammonia precursor (120; 220; 420; 520) is stored in solid form.

4. The ammonia precursor refilling device (100; 200; 400; 500) of any one of the previous claims, wherein the container (110; 210; 410; 510) is provided with an indication indicating a filling level, said indication (115: 215; 415) indicating to a user how much water needs to be added to the container (110; 210; 410; 510).

5. The ammonia precursor refilling device (100; 200; 400; 500) of any one of the previous claims, wherein the container (110; 210; 410; 510) comprises a rigid neck (117; 217; 417) configured to allow insertion of a neck of a water bottle, said neck of said water bottle having a diameter below 50 mm.

6. The ammonia precursor refilling device (100; 200; 400; 500) of any one of the previous claims, wherein the second volume is at least 1,5 times bigger than the first volume.

7. The ammonia precursor refilling device (100; 200; 400; 500) of any one of the previous claims, wherein the container (110; 210; 410; 510) comprises a flexible bag (112; 212; 412; 512) configured to have the first volume in a folded state and to have the second volume in an unfolded state filled with water.

8. The ammonia precursor refilling device (100; 400; 500) of any one of the claims 1-6, said container (110; 410; 510) comprising an outer housing (113; 413; 513) with a bellow (114; 414; 514) and a closed inner bag (112; 412; 512), wherein said ammonia precursor (120; 420; 520) is stored in the closed inner bag (112; 412; 512), wherein said outer housing (113; 413; 513) is provided with the opening (111; 411), and wherein said bellow (114; 414; 514) allows extending a height of the outer housing (113; 413; 513).

9. The ammonia precursor refilling device (100; 400; 500) of claim 8, wherein the opening mechanism comprises a cap (130; 430; 530), said cap (130; 430; 530) comprising a base plate (131) with a pipe (132) and a removable secondary cap (133) closing said pipe (132).

10. The ammonia precursor refilling device (100; 400; 500) of any one of the previous claims, further comprising locking means (141, 142, 143, 144, 145; 441, 442, 443; 541, 542, 543) configured for locking the container (110; 410; 510) in a state in which the container (110; 410; 510) has the second volume.

11. The ammonia precursor refilling device (100; 200; 400; 500) of any one of the previous claims, wherein the ammonia precursor (120; 220; 420; 520) comprises solid urea.

12. The ammonia precursor refilling device (100; 200; 400; 500) of any one of the previous claims, wherein the amount of solid urea stored is a multiple of between 466g and 497 g, and wherein the second volume is such that a multiple of 1 litre of water can be added.

13. An ammonia precursor refilling device (300) comprising a container (310) storing an ammonia precursor (320) in solid form;
said container (310) having a first opening (311) which is closed by a first opening mechanism;
said first opening (311; 411) having an interface (318) which is configured for being mechanically coupled with a neck (N) of a water bottle (W);
said container (310) having a second opening (312) which is closed by a second opening mechanism; said second opening (312) allowing filling of a vehicle tank with an ammonia precursor solution (320) contained in the assembly of the container (310) coupled to the water bottle (W).

14. The ammonia precursor refilling device (300) of claim 13, wherein the first opening (311) is formed in a neck (317) of the container (310), and wherein said neck (317) is provided with an internal thread (318) which is couplable with an external thread (T) of a water bottle (W).

15. The ammonia precursor refilling device (300) of claim 13 or 14, wherein the first opening mechanism comprises a seal (331) covering said first opening (311), and wherein said seal (331) is configured to be broken by coupling a water bottle (W) to the interface (318) associated with the first opening (311).

16. The ammonia precursor refilling device (300) of any one of the claims 13-15, wherein the second opening mechanism comprises a cap (332) and/or a valve; and/or wherein the second opening mechanism comprises a coupling interface configured for fitting on a filler neck, e.g. a filler neck as described in ISO 22241-1:2006 standard; and/or wherein the second opening mechanism is configured to allow venting of the container (310) after having mechanically coupled the container (310) to a water bottle (W.

17. The ammonia precursor refilling device (100; 200; 300; 400; 500) of any one of the previous claims, wherein the ammonia precursor (120; 220; 320; 420; 520) is in the form of powder and/or granules and/or pellets and/or pills, said granules optionally having a coating.

## Patentansprüche

1. Wiederauffüllungsvorrichtung (100; 200; 400; 500) für einen Ammoniakvorläufer mit einem Behälter (110; 210; 410; 510), der einen Ammoniak-Vorläufer (120; 220; 420; 520) in fester Form speichert, **dadurch gekennzeichnet, dass**
der Behälter (110; 210; 410; 510) so konfiguriert ist, dass er während der Lagerung in ein erstes Volumen passt und auf ein zweites Volumen vergrößert wird, das größer als das erste Volumen ist;
der Behälter (110; 210; 410; 510) mit einer Öffnung (111; 211; 411) versehen ist, die durch einen Öffnungsmechanismus (130; 230; 430; 530) geschlossen ist;
wobei das zweite Volumen gemessen wird, damit der Behälter (110; 210; 410; 510) durch die Öffnung (111; 211; 411) mit Wasser bis zu einer Menge gefüllt werden kann, die ausreicht, um den Ammoniakvorläufer (120; 220; 420; 520) in fester Form aufzulösen, um zumindest teilweise gelöst zu werden, um eine Ammoniakvorläuferlösung zu bilden.

2. Die Wiederauffüllungsvorrichtung (100; 200; 400; 500) für einen Ammoniakvorläufer nach dem Anspruch 1,
wobei der Öffnungsmechanismus eine entfernbare Kappe (130; 230; 430; 530) ist, oder eine entfernbare Dichtung ist oder ein Ventil ist.

3. Die Wiederauffüllvorrichtung (100; 200; 400; 500) für einen Ammoniakvorläufer nach einem der Ansprüche 1 oder 2,
wobei der Behälter (110; 210; 410; 510) einen flexiblen Beutel (112; 212; 412; 512) umfasst, in dem der Ammoniakvorläufer (120; 220; 420; 520) in fester Form gelagert wird.

4. Die Wiederauffüllungsvorrichtung (100; 200; 400; 500) für einen Ammoniakvorläufer nach einem der vorhergehenden Ansprüche,
wobei der Behälter (110; 210; 410; 510) mit einer Anzeige versehen ist, die einen Füllstand anzeigt,
wobei die Anzeige (115: 215; 415) einem Benutzer anzeigt, wie viel Wasser zu dem Wasser in dem Behälter (110; 210; 410; 510) hinzugefügt werden muss.

5. Die Wiederauffüllungsvorrichtung (100; 200; 400; 500) für einen Ammoniakvorläufer nach einem der vorhergehenden Ansprüche,
wobei der Behälter (110; 210; 410; 510) einen starren Hals (117; 217; 417) aufweist, der dazu konfiguriert ist, das Einführen eines Halses einer Wasserflasche zu ermöglichen, wobei der Hals der Wasserflasche einen Durchmesser von unterhalb von 50 mm aufweist;

6. Die Wiederauffüllungsvorrichtung (100; 200; 400; 500) für einen Ammoniakvorläufer nach einem der vorhergehenden Ansprüche,
wobei das zweite Volumen mindestens 1,5 mal größer ist als das erste Volumen.

7. Die Wiederauffüllungsvorrichtung (100; 200; 400; 500) für einen Ammoniakvorläufer nach einem der vorhergehenden Ansprüche,
wobei der Behälter (110; 210; 410; 510) einen flexiblen Beutel (112; 212; 412; 512) aufweist, der konfiguriert ist das erste Volumen in einem gefalteten Zustand zu haben und das zweite Volumen in einem aufgefalteten Zustand mit Wasser gefüllt zu haben.

8. Die Wiederauffüllungsvorrichtung (100; 400; 500) für einen Ammoniakvorläufer nach einem der Ansprüche 1 bis 6,
wobei der Behälter (110; 410; 510) ein äußeres Gehäuse (113; 413; 513) mit einem Balg (114; 414; 514) und einem geschlossenen Innenbeutel (112; 412; 512) aufweist, wobei der Ammoniakvorläufer (120; 420; 520) in dem geschlossenen Innenbeutel (112; 412; 512) gelagert ist, wobei das Außengehäuse (113; 413; 513) mit der Öffnung (111; 411) versehen ist, und wobei der Balg (114; 414; 514) das Erstrecken einer Höhe des äußeren Gehäuses (113; 413; 513) ermöglicht.

9. Die Wiederauffüllungsvorrichtung (100; 400; 500) für einen Ammoniakvorläufer nach Anspruch 8,
wobei der Öffnungsmechanismus eine Kappe (130; 430; 530) umfasst, wobei die Kappe (130; 430; 530) eine Basisplatte (131) aufweist mit einem Rohr (132) und einer entfernbaren zweiten Kappe (133), die das Rohr (132) verschließt.

10. Wiederauffüllungsvorrichtung (100; 400; 500) für einen Ammoniakvorläufer nach einem der vorhergehenden Ansprüche,
wobei die Wiederauffüllungsvorrichtung ferner Verriegelungsmittel (141, 142, 143, 144, 145; 441, 442, 443; 541, 542, 543) aufweist, die konfiguriert dazu sind, zum Verriegeln des Behälters (110; 410; 510) in einem Zustand, in dem der Behälter (110; 410; 510) das zweite Volumen aufweist.

11. Die Wiederauffüllungsvorrichtung (100; 400; 500) für einen Ammoniakvorläufer nach einem der vorhergehenden Ansprüche,
wobei der Ammoniak-Vorläufer (120; 220; 420; 520) festen Harnstoff umfasst.

12. Die Wiederauffüllungsvorrichtung (100; 400; 500) für einen Ammoniakvorläufer nach einem der vorhergehenden Ansprüche,
wobei die Menge an gespeichertem festem Harnstoff ein Vielfaches der Masse zwischen 466 g und 497 g ist und wobei das zweite Volumen derart ist, dass ein Vielfaches von 1 Liter Wasser hinzugefügt werden kann.

13. Eine Wiederauffüllungsvorrichtung (300) für einen Ammoniakvorläufer, umfassend einen Behälter (310), der einen Ammoniak-Vorläufer (320) in fester Form speichert; wobei der Behälter (310) eine erste Öffnung (311) aufweist, die durch einen ersten Öffnungsmechanismus geschlossen ist; wobei die erste Öffnung (311; 411) eine Schnittstelle (318) aufweist, die zur mechanischen Kopplung mit einem Hals (N) einer Wasserflasche (W) ausgebildet ist; wobei der Behälter (310) eine zweite Öffnung (312) aufweist, die durch einen zweiten Öffnungsmechanismus geschlossen ist; wobei die zweite Öffnung (312) das Füllen eines Fahrzeugtanks mit einer Ammoniakvorläuferlösung (320) ermöglicht, die in der Anordnung des Behälters (310) enthalten ist, der mit der Wasserflasche (W) verbunden ist.

14. Die Wiederauffüllungsvorrichtung (300) für einen Ammoniakvorläufer nach Anspruch 13,
wobei die erste Öffnung (311) in einem Hals (317) des Behälters (310) ausgebildet ist, und wobei der Hals (317) mit einem Innengewinde versehen ist (318), die mit einem Außengewinde (T) einer Wasserflasche (W) koppelbar ist.

15. Die Wiederauffüllungsvorrichtung (300) für einen Ammoniakvorläufer nach Anspruch 13 oder 14,
wobei der erste Öffnungsmechanismus eine Dichtung (331) umfasst, die die erste Öffnung (311) abdeckt, und wobei die Dichtung (331) so konfiguriert ist, dass sie durch Kuppeln bricht Wasserflasche (W) zu der Schnittstelle (318), die der ersten Öffnung (311) zugeordnet ist.

16. Die Wiederauffüllungsvorrichtung (300) für einen Ammoniakvorläufer nach einem der Ansprüche 13 bis 15,
wobei der zweite Öffnungsmechanismus eine Kappe (332) und / oder ein Ventil umfasst; und / oder wobei der zweite Öffnungsmechanismus eine Kopplungsschnittstelle umfasst, die zum Anbringen an einem Einfüllstutzen konfiguriert ist, zum Beispiel Einfüllstutzen wie in ISO 22241-1:2006 beschrieben; und / oder wobei der zweite Öffnungsmechanismus so ausgebildet ist, dass er den Behälter (310) entlüften kann, nachdem er den Behälter (310) mechanisch mit einer Wasserflasche (W) gekoppelt hat.

17. Die Wiederauffüllungsvorrichtung (100; 200; 300; 400; 500) für einen Ammoniakvorläufer nach einem der vorhergehenden Ansprüche,
wobei der Ammoniak-Vorläufer (120; 220; 320; 420; 520) in der Form von Pulver und / oder Granulat und / oder Pellets und / oder Pillen ist, wobei die Granulate gegebenenfalls eine Beschichtung aufweisen.

## Revendications

1. Dispositif de recharge (100 ; 200 ; 400 ; 500) de précurseur d'ammoniac comprenant un récipient (110 ; 210 ; 410 ; 510) contenant un précurseur d'ammoniac (120 ; 220 ; 420 ; 520) sous forme solide **caractérisé en ce que** :
ledit récipient (110 ; 210 ; 410 ; 510) est conçu pour rentrer dans un premier volume pendant le stockage et pour être agrandi à un second volume qui est plus grand que le premier volume ;
ledit récipient (110 ; 210 ; 410 ; 510) est doté d'une ouverture (111 ; 211 ; 411) qui est fermée par un mécanisme d'ouverture (130 ; 230 ; 430 ; 530) ;
ledit second volume est mesuré pour permettre que le récipient (110 ; 210 ; 410 ; 510) soit rempli à travers l'ouverture (111 ; 211 ; 411) avec de l'eau en quantité suffisante pour permettre que ledit précurseur d'ammoniac (120 ; 220 ; 420 ; 520) sous forme solide soit au moins partiellement dissous afin de former une solution de précurseur d'ammoniac.

2. Dispositif de recharge (100 ; 200 ; 400 ; 500) de précurseur d'ammoniac selon la revendication 1, dans lequel le mécanisme d'ouverture est un capuchon amovible (130 ; 230 ; 430 ; 530), un joint amovible ou une valve.

3. Dispositif de recharge (100 ; 200 ; 400 ; 500) de précurseur d'ammoniac selon la revendication 1 ou 2, dans lequel le récipient (110 ; 210 ; 410 ; 510) comprend un sac souple (112 ; 212 ; 412 ; 512) dans lequel est stocké le précurseur d'ammoniac (120 ; 220 ; 420 ; 520) sous forme solide.

4. Dispositif de recharge (100 ; 200 ; 400 ; 500) de précurseur d'ammoniac selon l'une quelconque des revendications précédentes, dans lequel le récipient (110 ; 210 ; 410 ; 510) est doté d'une indication indiquant un niveau de remplissage, ladite indication (115 ; 215 ; 415) indiquant à un utilisateur la quantité d'eau nécessaire à ajouter au récipient (110 ; 210 ; 410 ; 510).

5. Dispositif de recharge (100 ; 200 ; 400 ; 500) de précurseur d'ammoniac selon l'une quelconque des revendications précédentes, dans lequel le récipient (110 ; 210 ; 410 ; 510) comprend un goulot rigide (117 ; 217 ; 417) conçu pour permettre l'insertion d'un goulot d'une bouteille d'eau, ledit goulot de ladite bouteille d'eau ayant un diamètre inférieur à 50 mm.

6. Dispositif de recharge (100 ; 200 ; 400 ; 500) de précurseur d'ammoniac selon l'une quelconque des revendications précédentes, dans lequel le second volume est au moins 1,5 fois plus grand que le premier volume.

7. Dispositif de recharge (100 ; 200 ; 400 ; 500) de précurseur d'ammoniac selon l'une quelconque des revendications précédentes, dans lequel le récipient (110 ; 210 ; 410 ; 510) comprend un sac souple (112 ; 212 ; 412 ; 512) conçu pour avoir le premier volume dans un état plié et pour avoir le second volume dans un état déplié rempli d'eau.

8. Dispositif de remplissage (100 ; 400 ; 500) de précurseur d'ammoniac selon l'une quelconque des revendications 1 à 6, ledit récipient (110 ; 410 ; 510) comportant un logement externe (113 ; 413 ; 513) doté d'un soufflet (114 ; 414 ; 514) et d'un sac interne fermé (112 ; 412 ; 512), dans lequel ledit précurseur d'ammoniac (120 ; 420 ; 520) est stocké dans le sac interne fermé (112 ; 412 ; 512), dans lequel ledit logement externe (113 ; 413 ; 513) est doté de l'ouverture (111 ; 411), et dans lequel ledit soufflet (114 ; 414 ; 514) permet d'étendre une hauteur du logement externe (113 ; 413 ; 513).

9. Dispositif de recharge (100 ; 400 ; 500) de précurseur d'ammoniac selon la revendication 8, dans lequel le mécanisme comprend un capuchon (130 ; 430 ; 530), ledit capuchon (130 ; 430 ; 530) comprenant une plaque de base (131) dotée d'un tuyau (132) et d'un capuchon secondaire amovible (133) fermant ledit tuyau (132).

10. Dispositif de recharge (100 ; 400 ; 500) de précurseur d'ammoniac selon l'une quelconque des revendications précédentes, comprenant en outre des moyens de verrouillage (141, 142, 143, 144, 145 ; 441, 442, 443 ; 541, 542, 543) conçus pour verrouiller le récipient (110 ; 410 ; 510) dans un état dans lequel le récipient (110 ; 410 ; 510) a le second volume.

11. Dispositif de recharge (100 ; 200 ; 400 ; 500) de précurseur d'ammoniac selon l'une quelconque des revendications précédentes, dans lequel le précurseur d'ammoniac (120 ; 220 ; 420 ; 520) comprend de l'urée solide.

12. Dispositif de recharge (100 ; 200 ; 400 ; 500) de précurseur d'ammoniac selon l'une quelconque des revendications précédentes, dans lequel la quantité d'urée solide stockée est un multiple d'une valeur comprise entre 466 g et 497 g, et dans lequel le second volume est tel qu'un multiple de 1 litre d'eau peut être ajouté.

13. Dispositif de recharge (300) de précurseur d'ammoniac comprenant un récipient (310) stockant un précurseur d'ammoniac (320) sous forme solide ;
ledit récipient (310) ayant une première ouverture (311) qui est fermée par un premier mécanisme d'ouverture ; ladite première ouverture (311 ; 411) ayant une interface (318) qui est conçue pour être mécaniquement accouplée à un goulot (N) d'une bouteille d'eau (W) ; ledit récipient (310) ayant une seconde ouverture (312) qui est fermée par un second mécanisme d'ouverture ; ladite seconde ouverture (312) permettant le remplissage d'un réservoir de véhicule avec une solution (320) de précurseur d'ammoniac contenue dans l'ensemble du récipient (310) accouplé à la bouteille d'eau (W).

14. Dispositif de recharge (300) de précurseur d'ammoniac selon la revendication 13, dans lequel la première ouverture (311) est formée dans un goulot (317) du récipient (310), et dans lequel ledit goulot (317) est doté d'un filet interne (318) qui peut être accouplé à un filet externe (T) d'une bouteille d'eau (W).

15. Dispositif de recharge (300) de précurseur d'ammoniac selon la revendication 13 ou 14, dans lequel le premier mécanisme d'ouverture comprend un joint (331) recouvrant ladite première ouverture (311), et dans lequel ledit joint (331) est conçu pour être brisé par l'accouplement d'une bouteille d'eau (W) à l'interface (318) associée à la première ouverture (311).

16. Dispositif de recharge (300) de précurseur d'ammoniac selon l'une quelconque des revendications 13 à 15, dans lequel le second mécanisme d'ouverture comprend un capuchon (332) et/ou une valve ; et/ou dans lequel le second mécanisme d'ouverture comprend une interface d'accouplement conçue pour s'ajuster sur un goulot de remplissage, par ex. un goulot de remplissage tel que décrit dans la norme ISO 22241-1:2006 ; et/ou dans lequel le second mécanisme d'ouverture est conçu pour permettre la mise à l'air libre du récipient (310) après l'accouplement mécanique du récipient (310) à une bouteille d'eau (W).

17. Dispositif de recharge (100 ; 200 ; 300 ; 400 ; 500) de précurseur d'ammoniac selon l'une quelconque des revendications précédentes, dans lequel le précurseur d'ammoniac (120 ; 220 ; 320 ; 420 ; 520) est sous forme de poudre et/ou de granules et/ou de pastilles et/ou de pilules, lesdits granules ayant éventuellement un enrobage.
